Europäisches Patentamt

European Patent Office

Office européen des brevets

(19)

(11) **EP 0 784 789 B1**

(12) **EUROPÄISCHE PATENTSCHRIFT**

(45) Veröffentlichungstag und Bekanntmachung des Hinweises auf die Patenterteilung:
**22.07.1998 Patentblatt 1998/30**

(21) Anmeldenummer: **95934655.2**

(22) Anmeldetag: **02.10.1995**

(51) Int Cl.[6]: **G01N 31/00**, G01N 1/00, H01J 49/04

(86) Internationale Anmeldenummer:
**PCT/EP95/03889**

(87) Internationale Veröffentlichungsnummer:
**WO 96/11397 (18.04.1996 Gazette 1996/17)**

(54) **REDUKTIONSOFEN UND VERFAHREN ZUR QUANTITATIVEN DEUTERIUMBESTIMMUNG IN WASSERSTOFFHALTIGEN PROBEN**

REDUCTION FURNACE AND PROCESS FOR QUANTITATIVE DEUTERIUM DETERMINATION IN HYDROGEN-CONTAINING SAMPLES

FOUR A REDUCTION ET PROCEDE DE DETERMINATION QUANTITATIVE DE DEUTERIUM DANS DES ECHANTILLONS CONTENANT DE L'HYDROGENE

(84) Benannte Vertragsstaaten:
**AT BE CH DE DK ES FR GB IT LI NL SE**

(30) Priorität: **05.10.1994 DE 4437120**

(43) Veröffentlichungstag der Anmeldung:
**23.07.1997 Patentblatt 1997/30**

(73) Patentinhaber:
**UFZ-UMWELTFORSCHUNGSZENTRUM LEIPZIG-HALLE GMBH**
**04318 Leipzig (DE)**

(72) Erfinder:
• **GEHRE, Matthias**
  **D-04159 Leipzig (DE)**
• **HÖFLING, Reiner**
  **D-04439 Engelsdorf (DE)**
• **KOWSKI, Peter**
  **D-04318 Leipzig (DE)**

(74) Vertreter: **Ziebig, Marlene, Dr. Dipl.-Chem.**
  **Patentanwälte**
  **Gulde Hengelhaupt Ziebig**
  **Lützowplatz 11-13**
  **10785 Berlin (DE)**

(56) Entgegenhaltungen:
GB-A- 873 928     GB-A- 904 165
GB-A- 2 120 007     US-A- 3 296 435
US-A- 3 778 975     US-A- 3 877 875

• ZENTRALINSTITUT-FÜR-ISOTOPEN UND STRAHLENFORSCHUNG-MITTEILUNGEN, Bd. 37, 1981 LEIPZIG (DDR), Seiten 46-59, in der Anmeldung erwähnt

## Beschreibung

Die Erfindung betrifft ein Verfahren zur quantitativen Deuteriumbestimmung in wasserstoffhaltigen Proben und einen Reduktionsofen zur Reduktion von gasförmigen oder flüssigen wasserstoffhaltigen Substanzen, der direkt an ein Isotopenverhältnismassenspektrometer (IRMS) gekoppelt werden kann, wodurch eine on line-gekoppelte, zuverlässige Deuteriumbestimmung möglich wird, die automatisierbar ist.

Für die Deuteriumbestimmung mit Hilfe eines IRMS sind verschiedene probenchemische Verfahren zur Erzeugung von Wasserstoff bekannt. Die massenspektrometrische Isotopenanalyse erfolgt in jedem Falle am Wasserstoffgas, das aus der jeweiligen Probe entweder durch Reduktion oder Isotopenaustausch zwischen Wasser und Wasserstoff erzeugt werden muß. Am bekanntesten sind off line-Verfahren mit der Trennung von Probenchemie und Messung. Das Wasserstoffgas wird durch Reduktionsmittel wie Eisen, Mangan, Zink, Uran und Chrom freigesetzt, wobei bei Verwendung von Eisen und Mangan keine befriedigenden Ergebnisse erzielt werden.

Nach der bekannten Zink-Methode (Coleman, M. L.; Sherpherd, T. J.; Durham, J. J.; Rouse, J. E.; Moore, G. R.: Anal. Chem. 1982, 54, 993-995 sowie Kendall, C. und Coplen, T. B.: Anal. Chem. 1985, 57, 1437-1440; sowie Tanweer, A.: Anal. Chem. 1990, 62, 2158-2160 und Vennemann, T. W. and O'Neil: J. R. Chem. Geol. (Isot. Geosci. Sect.) 1993, 103, 227-234) erfolgt die Reduktion des Wassers mit Zink bei etwa 400°C in Ampullen oder in einem Kreislaufsystem. Die erforderliche Probenmenge beläuft sich auf 5-70 mg sauberes Wasser je nach Verfahren.

Nachteilig ist, daß nur Zink eines speziellen Herstellungsverfahrens befriedigende Ergebnisse liefert. Wenn das Wasser Verschmutzungen (Öl, Salz, etc) enthält, kann diese Methode nicht angewendet werden. Außerdem wird durch die Löslichkeit von Wasserstoff im Zink das Isotopenverhältnis verfälscht.

Weiterhin ist es bekannt, Uran als Reduktionsmittel einzusetzen. Die Reduktion des Wassers erfolgt mit Uran bei verschiedenen Temperaturen (400-800°C) in einer speziellen Apparatur. Die Probenmenge ist analog wie bei der obengenannten Zink-Methode (Bigeleisen, J.; Perlmann, M. L.; H. C. Anal. Chem. 1952, 24, 1356-1357 sowie GB-Pat. 904 165 und GSF-Jahresbericht 1987, 217-225).

Nachteilig ist, daß bestimmte Temperaturbedingungen exakt eingehalten werden müssen, weil die Wasserstofflöslichkeit im Uran temperaturabhängig ist. Bei Temperaturabweichungen kommt es zu einer irreversiblen Uranhydrid-Bildung (Verfälschung des Isotopenverhältnisses). Verschmutzte Wässer (Öl, Salz, etc) können nicht eingesetzt werden.

Vorgeschlagen wurde auch eine Reduktion mit Chrom (Rolle, W.; Hübner, H. Fresenius Z. anal. Chemie 232 [1967] 328 und Runge, A. Isotopenpraxis 16 [1980] 2). Die Reduktion des Wassers und anderer wasserstoffhaltiger Substanzen durch Chrom erfolgt bei Temperaturen zwischen 700 und 1000 °C in Ampullen oder in speziellen Apparaturen. Die erforderlichen Probenmengen belaufen sich auf 5 mg Wasser oder dieser Wassermenge äquivalente Wasserstoffmenge einer anderen wasserstoffhaltigen Substanz.

Auch on line-Verfahren mit einer Kopplung an das IRMS sind bekannt. Nach Horita. J. Chem. Geol. (Isot. Geosci. Sect.) 1988, 72, 89-94 sowie in: J. Chem. Geol. (Isot. Geosci. Sect.) 1989, 79, 107-112 und Horita, J.; Ueda, A.; Mizukami, K. and Takatori, I; Appl. Radiat. Isot. 40 (1989) 9, 801-805 ist ein Isotopenaustauschverfahren bekannt. Bei diesem Verfahren wird das Isotopengleichgewicht zwischen einer Wasserprobe und einem Wasserstoffgas mit Hilfe eines Platin-Katalysators eingestellt und die Probe direkt in das IRMS eingelassen.

Nachteilig an diesem Verfahren ist, daß große Probenmengen (20 ml sauberes Wasser) erforderlich sind, aufgrund der Temperaturabhängigkeit des Isotopentrennfaktors beim Austausch Temperaturkonstanz ($\leq 0,03$ °C) gewährleistet werden muß und ein großer Zeitaufwand bei der Probenvorbereitung erforderlich ist, so daß dieses Verfahren schwierig zu handhaben ist und wenig Anwendung gefunden hat.

Gemäß ZFI-Mitteilungen 37 (1981), S. 49-52 sowie dem GB-Patent 904 165 und den GSF-Jahresberichten 1985-1987, ist es auch bekannt, das Reduktionsverfahren für on line-Prozeduren einzusetzen. Die bisher vorgeschlagenen gekoppelten Verfahren der Probenpräparation mit dem Massenpektrometer bzw. dem IRMS benutzen Uran als Reduktionsmittel. Diese Methoden erlauben jedoch lediglich die Reduktion von Wasser. Andere wasserstoffhaltige Substanzen können nicht reduziert werden. Außerdem ist der apparative Aufbau nicht einfach, es werden größere Probenmengen benötigt und handelsübliche Autosampler können aufgrund dieser Probenmengen nicht eingesetzt werden.

So beinhaltet z.B. die in den ZFI-Mitteilungen 37 (1981), S. 49-52 beschriebene Methode die vollständige Verdampfung einer Wasserprobe in einem vorgeschalteten Gefäß und die anschließende Reduktion eines Teils des Wasserdampfes an Uran in einer nachgeschalteten Apparatur, bevor der Einlaß des Meßgases ins Massenspektrometer zur Isotopenverhältnis(D/H)bestimmung erfolgt (s. Abb. 16).

Neben den bereits genannten Problemen der Verwendung des Urans als Reduktionsmittel ist im letzten Falle als nachteilig auch die Meßmethode der Isotopenverhältnissbestimmung durch Flächenintegration der Meßsignale zu nennen.

Aufgabe der Erfindung war es deshalb, ein Verfahren zur quantitativen Deuteriumbestimmung mit on line-Kopplung von Probenpräparation und IRMS bereitzustellen, das die Messung kleinster Probenmengen von gasförmigen und flüssigen wasserstoffhaltigen Substanzen erlaubt, apparativ äußerst einfach aufgebaut ist und eine hohe Meßgenauigkeit (Reproduzierbarkeit der Werte) aufweist. Das Verfahren soll automatisierbar sein.

Die Aufgabe der Erfindung wird durch ein Verfahren gemäß der Ansprüche 11 bis 16 unter Anwendung eines neuen Reduktionsofens gemäß der Ansprüche 1 bis 10 gelöst.

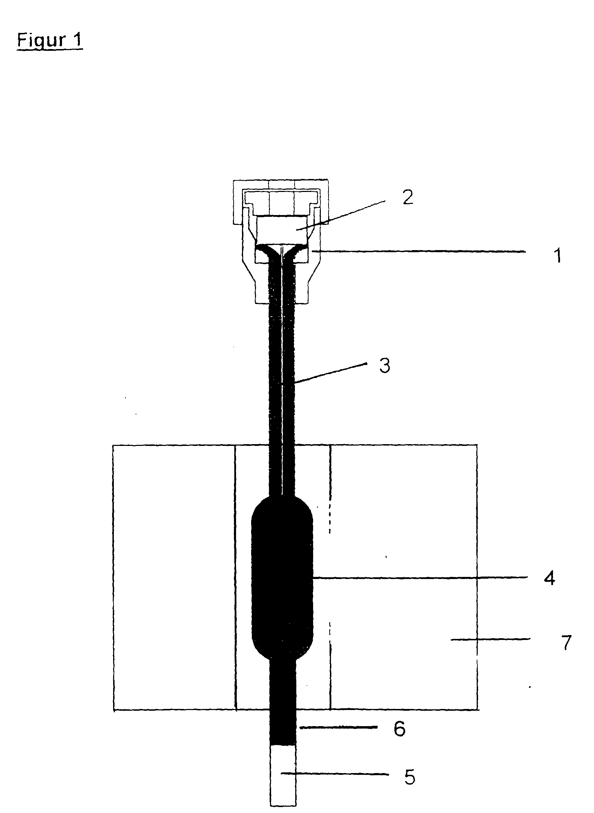

Der erfindungsgemäße Reduktionsofen ist in Abbildung 1 zusammen mit der äußeren Heizvorrichtung 7 dargestellt, die zum Erhitzen des Reduktionsofens dient und so gestaltet sein muß, daß im Reaktionsraum 4 des Ofens eine konstante Reduktionstemperatur gehalten werden kann. Vorzugsweise kann ein Infrarotofen oder ein elektrischer Heizofen eingesetzt werden.

In einer besonders bevorzugten Ausführungsform des erfindungsgemäßen Verfahrens wird der erfindungsgemäße Reduktionsofen mit Chrompulver einer Korngröße von 0,16 bis 0,3 mm gefüllt, evakuiert und auf eine Temperatur im Bereich von 700 bis 1100°C erhitzt.

Nach Erreichen der Reduktionstemperatur im Reaktionsraum 4 und einer Temperatur von ca. 150°C an der Injektionseinheit wird die Probe (1 µl Wasser oder Wasserstoff-Äquivalent) mit einer vakuumdichten Mikroliterspritze durch die mit einem Septum 2 gegen die Außenluft abgedichtete Injektionseinheit 1 in den Reduktionsofen injiziert. Die explosionsartig verdampfende Probe wird reduziert und der entstandene Wasserstoff strömt aufgrund des Druckunterschiedes zwischen dem Reduktionsofen und dem Faltenbalg des Einlaßteiles in das Massenspektrometer. Nach erfolgtem Druckausgleich (ca. 20 sec) wird das Einlaßventil zum Faltenbalg geschlossen und mit der Messung des Isotopenverhältnisses D/H begonnen.

Nach jeder Messung muß der Rest des Meßgases sorgfältig aus dem Reduktionsofen, dem Faltenbalg und dem Massenspektrometer abgepumpt werden, was durch ca. 5 minütiges Pumpen mit der Hochvakuumpumpe des IRMS erreicht wird.

Es zeigte sich, daß bei Einhaltung dieser Arbeitsweise sowohl im Reduktionsofen als auch im IRMS keine Memory-Effekte auftreten.

Zu Beginn jeder Messung werden die Intensitäten der Meßsignale der Masse 2 des Wasserstoff-Gases von Probe und Standard im IRMS durch die Faltenbälge auf die (vom IRMS-Gerätehersteller vorgegebenen) Intensitätsbereiche angeglichen. Darauf erfolgt die Messung des Isotopenverhältnisses im Wechsel Probe/Standard und die Berechnung des δD-Wertes der Probe.

Die Reduktion organischer, wasserstoffhaltiger Substanzen erfordert teilweise eine längere Verweilzeit im Reduktionsofen (bei Methan bis zu 45 min), bis die Substanz vollständig zu Wasserstoff reduziert wird. Diese Zeit kann durch Zumischung eines Katalysators zum Reduktionsmittel erheblich verkürzt werden. Z.B. verkürzt sich beim Methan die Reaktionszeit bei Verwendung von Nickel-Wolle auf 15 Min. Als Katalysatoren können Metalle wie Ni, Co, Wo, Mo oder Pt verwendet werden. Vorzugsweise beträgt das Verhältnis von Chrom zum Katalysator zwischen 100:1 bis 20:1.

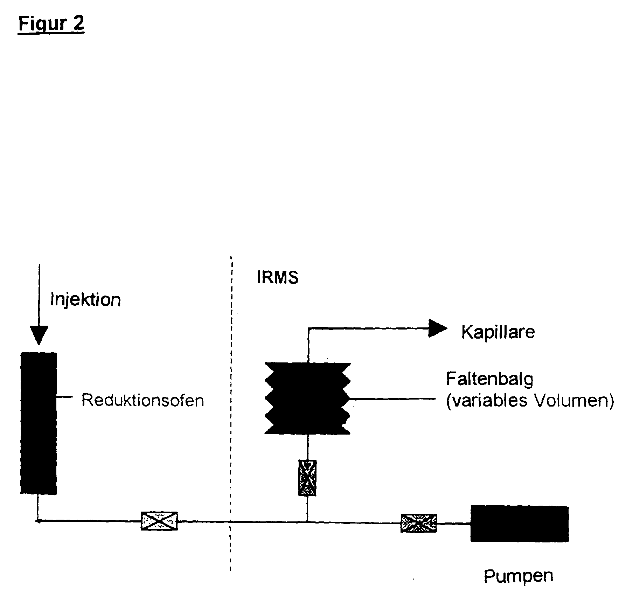

Die Prinzipdarstellung der erfindungsgemäßen on line-Kopplung zwischen dem Reaktionsofen und dem IRMS ist in Abb. 2 gezeigt. Vorteilhafter Weise kann die Injektion der Proben auch mit einem Autosampler durchgeführt werden.

Wasserstoffhaltige Proben, die mit dem erfindungsgemäßen Verfahren gemessen werden können, sind flüssige oder gasförmige anorganische und organische Substanzen, wie z.B. Wasser, Ammoniak, Schwefelwasserstoff, Alkohole und Fruchtsäfte, Erdgas- und Erdölkomponenten, pflanzliche und tierische (einschließlich menschlicher) Stoffwechselprodukte sowie Amino- und Fettsäuren.

Der erfindungsgemäße Reduktionsofen unterscheidet sich von bekannten Reduktionsöfen, die im wesentlichen aus einem Rohr bestehen, vor allem durch seine Kapillare 3. Die Kapillare sollte ein möglichst geringes Volumen aufwiesen, damit bei der Verdampfung der Probe keine das Meßergebnis verfälschende Isotopenfraktionierung stattfinden kann. Andererseits muß die Kapillare eine solche Länge aufweisen, daß die Injektionseinheit 1 nicht von den im Reaktionsraum 4 herrschenden Temperaturen von über 700°C undicht wird. An der Injektionseinheit muß eine Temperatur von ca. 150°C herrschen, die eine flash-Verdampfung der Probe gewährleistet.

Der Reaktionsraum 4 des Ofens muß von seiner Größe her ein Optimum in Bezug auf Probendurchsatz, Meßrichtigkeit und Temperaturkonstanz darstellen. Es hat sich gezeigt, daß für einen Probendurchsatz von 100 bis 150 Proben á 1 µl Wasser (oder Wasserstoffäquivalent) ein Reaktionsraum zwischen 50 - 60 mm Länge und 15 - 20 mm Innendurchmesser (ID) erforderlich ist. Entsprechend sollte die Länge der Kapillare bei einem Innendurchmesser zwischen 0,6 - 1 mm zwischen 50 - 100 mm betragen.

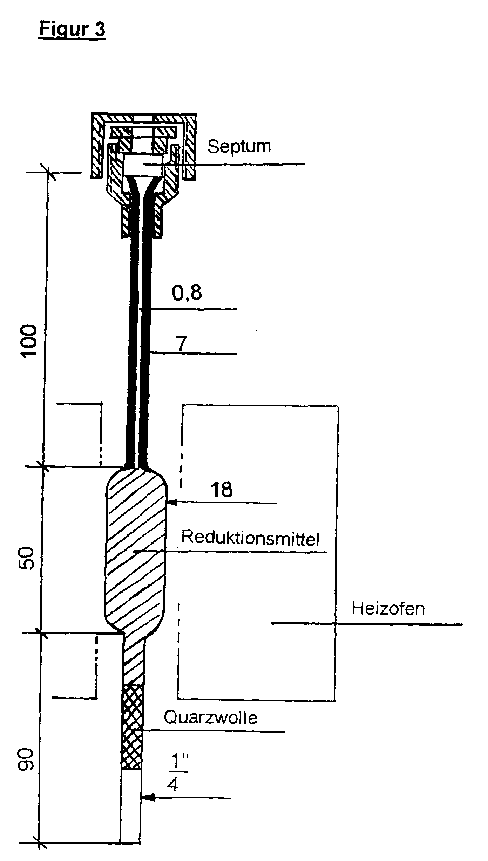

In einer besonders bevorzugten Ausführungsform der Erfindung wird der Reduktionsofen gemäß Abb. 3 eingesetzt. Dieser Ofen weist eine Kapillare von 100 mm Länge und 0,8 mm ID auf. Der Reaktionsraum hat eine Länge von 50 mm und einen ID von 16 mm (Außendurchmesser=AD=18 mm).

In dem 90 mm langen Anschlußrohr (1/4" AD, kompatibel mit MS) befindet sich Quarzwolle. In dem Teil des Anschlußrohres, der noch mit Chrom gefüllt ist, aber nicht zum temperaturkonstanten Reaktionsraum gehört, werden alle anderen Elemente, die möglicherweise in der Probe enthalten sind, von Chrom gebunden.

Die Kapillare des in Abb. 3 dargestellten Reduktionsofens besitzt ein inneres Volumen von ca. 0,05 ml. Das freie Volumen im mit Chrom gefüllten Reaktionsraum beträgt ca. 3 ml. Die Verbindungsleitung vom Ausgang des Reaktionsraumes bis einschließlich Faltenbalg hat ein Volumen von ca. 45 ml . Dieses Verhältnis von ca. 1:15 zwischen dem freien Volumen des gefüllten Reaktionsraumes (einschließlich der Kapillare) und dem Volumen des Faltenbalges (einschließlich Anschlußleitung) hat sich als ein optimales Verhältnis herausgestellt, um den Meßfehler möglichst gering zu halten.

Die Vorteile des erfindungsgemäßen Verfahrens unter Verwendung des erfindungsgemäßen Reduktionsofens liegen auf der Hand und sind nachfolgend nochmals zusammenfassend dargestellt:

- Das Arbeiten mit außerordentlich kleinen Probemengen (≤ 1 mg Wasser oder Wasserstoffäquivalent) ist möglich, wodurch der Einsatz der Deuteriumbestimmung in Bereichen wie z.B. Geologie (Gesteinseinschlüsse), Mikrobiologie, Medizin oder Biochemie ermöglicht wird;
- Nutzung der genaueren Meßmethode der Abstandsmessung der Isotopenverhältnisse durch Probe/Standard-Vergleich am IRMS;
- hohe Meßgenauigkeit: Standardabweichung = ±1 ‰;
- äußerst einfacher Aufbau der Apparatur;
- schnelle Meßbereitschaft, hohe Zuverlässigkeit, einfache Handhabung bei Nutzung und Wartung;
- der Quarzofen ist schnell wiederverwendbar durch einfachen Wechsel des Reduktionsmittels;
- Automatisierbarkeit des Verfahrens (Injektion mit Autosampler);
- direkte Messung des Deuteriumgehaltes unterschiedlichster natürlicher Stoffe ohne vorherige Umwandlung zu Wasser

Nachfolgend soll das Funktionieren der erfindungsgemäßen on line-Methode an zwei Ausführungsbeispielen dargestellt werden, ohne das erfindungsgemäße Verfahren darauf einzuschränken.

**Beispiel 1:**

<u>Bestimmung des Deuteriumgehaltes von Standardwässsern</u>

Der erfindungsgemäße neue Reduktionsofen gemäß Abb. 3 wird mit handelsüblichem Chrom-Pulver (Korngröße ≤ 0,3 mm) gefüllt und unter Vakuum auf die notwendige Temperatur, bei Wasser 900°C, erhitzt. Die Injektionsstelle wird durch ein Septum gegen die Außenluft abgedichtet. Die Probe (1 µl Wasser) wird mit einer vakuumdichten Mikroliterspritze injiziert. Die Kanüle der Spritze wird ca. 20 Sekunden im Vakuum des heißen Ofens belassen und dabei von anhaftendem Wasser gereinigt. Sie ist somit für die Injektion einer neuen Probe ohne Spülung einsatzbereit.
Das verdampfende Wasser wird reduziert und der entstehende Wasserstoff strömt aufgrund des Druckunterschiedes zwischen dem Reduktionsofen und dem Faltenbalg des Einlaßteils in das Massenspektrometer. Nach erfolgtem Druckausgleich (ca. 20 sec) wird das Einlaßventil zum variablen Volumen geschlossen und mit der Messung begonnen.

Vor der Messung werden die Intensitäten der Meßsignale der Masse 2 des Wasserstoff-Gases von Probe und Standard durch das IRMS angeglichen.

Darauf erfolgt die Messung des Isotopenverhältnisses D/H im Wechsel Probe/Standard und die Berechnung des δD-Wertes der Probe. Der δD-Wert der Probe berechnet sich nach der Formel

$$\delta(‰) = \frac{R_{Probe} - R_{Standard}}{R_{Standard}} \cdot 10^3$$

wobei R das Isotopenverhältnis D/H bedeutet, das mit dem erfindungsgemäßen Verfahren gemessen wird.
Zur Testung der beschriebenen Methode werden die Standardwässer der Internationalen Atomenergiebehörde (IAEA) verwendet:

V-SMOW: Definitionsgemäß δ = 0 ‰
SLAP: Definitionsgemäß δ = -428 ‰ bezogen auf SMOW
GISP: Definitionsgemäß δ = -189,65 ± 1.82 ‰ bezogen auf SMOW-SLAP

| 1. Meßreihe | | | |
|---|---|---|---|
| | SMOW | GISP | SLAP |
| | δ = 0 ‰ | δ = -189,9 ‰ | δ = - 428 ‰ |
| Mittelwert δ | 3,3 | -186,9 | -422,9 |

(fortgesetzt)

| 1. Meßreihe | | | |
|---|---|---|---|
| | SMOW | GISP | SLAP |
| | $\delta = 0$ ‰ | $\delta = -189,9$ ‰ | $\delta = -428$ ‰ |
| S (Standardabweichung)<br>n (Zahl der Bestimmungen) | 0,75<br>7 | 0,1<br>2 | 0,35<br>4 |
| Normierung: | | | |
| gegen SMOW<br>gegen SMOW-SLAP | 0<br>0 | -189,6<br>-190,9 | -424,8<br>-428 |

| 2. Meßreihe | | | |
|---|---|---|---|
| | SMOW | GISP | SLAP |
| | $\delta = 0$ ‰ | $\delta = -189,9$ ‰ | $\delta = -428$ ‰ |
| Mittelwert $\delta$<br>S (Standardabweichung)<br>n (Zahl der Bestimmungen) | 0,73<br>1,15<br>6 | -187,6<br>0,77<br>5 | -425,7<br>0,97<br>6 |
| Normierung: | | | |
| gegen SMOW<br>gegen SMOW-SLAP | 0<br>0 | -188,2<br>-189,1 | -426,1<br>-428 |

Die Ergebnisse zeigen, daß die erfindungsgemäße on line- Methode richtige Werte liefert.

Beispiel 2:

Erfindungsgemäße Deuteriumbestimmung in verschiedenartigen Proben
Vergleich der off line-Methode mit dem erfindungsgemäßen Verfahren

| Proben | $\delta D$-Werte [‰] off line | $\delta D$-Werte [‰] direkte Kopplung | n | Standardabweichung [‰] direkte Kopplung |
|---|---|---|---|---|
| MAOW (Wasser aus dem mittleren Atlantischen Ozean) | +0,7 | +0,5 | 10 | 1,2 |
| Niederschlagsprobe | -100,8 | -100,1 | 10 | 1,4 |
| antarktischer Niederschlag | -290,4 | -289,8 | 10 | 1.1 |
| salzhaltiges Erdgas-Begleitwasser* | -67,4 | -66,9 | 5 | 0,7 |
| Champagner 1 | -8,1 | 7,9 | 3 | 0,4 |
| Champagner 2 | -1,2 | -0,8 | 3 | 0,7 |
| Methan | -162,6 | -162,6 | 5 | 1.1 |

* Salzgehalt: 24700 mg/l Na, 1039 mg/l Ca, 385 mg/l Mg, 37750 mg/l Cl⁻, 5300 mg/l $SO_4^{--}$

Die Ergebnisse zeigen, daß die erfindungsgemäße Methode bei den unterschiedlichen Anwendungen richtige und reproduzierbare Werte liefert.

**Bezugszeichenliste**

**Abb. 1**

1    Injektionseinheit

2    Septum

3    Kapillare

4    Reaktionsraum

5    Anschlußrohr

6    temperaturbeständiges, den Reaktionsraum abschließendes Material

7    äußere Heizvorrichtung

**Abb. 3**

-    alle Zahlenangaben in mm

**Patentansprüche**

1. Reduktionsofen zur Reduktion von wasserstoffhaltigen Proben und zur direkten Kopplung an ein Massenspektrometer bestehend aus einem hochtemperaturbeständigen wasserstoffundurchlässigen Material und umfassend eine übliche Injektionseinheit (1) mit Septum (2) zum Einbringen der Probe, eine Kapillare (3), die direkt die Injektionseinheit mit dem Reaktionsraum (4), der das Reduktionsmittel beinhaltet, verbindet, ohne daß Expansionsgefäße dazwischengeschaltet sind, und ein Anschlußrohr (5) zum Massenspektrometer, wobei der Reaktionsraum (4) durch ein temperaturbeständiges, für das Wasserstoffgas durchlässiges Material (6) abgeschlossen ist.

2. Reduktionsofen nach Anspruch 1,
   dadurch gekennzeichnet,
   daß er aus Quarzglas besteht.

3. Reduktionsofen nach Anspruch 1 oder 2,
   dadurch gekennzeichnet,
   daß er eine übliche Injektionseinheit zur Injektion von 1 µl Wasser oder einer anderen wasserstoffhaltigen Probe aufweist, die in ihrem Wasserstoffgehalt der Menge von 1 µl Wasser entspricht.

4. Reduktionsofen nach einem der Ansprüche 1 bis 3,
   dadurch gekennzeichnet,
   daß die Kapillare (3) in der Länge so gestaltet ist, daß einerseits bei der Verdampfung der Probe keine das Meßergebnis verfälschende Isotopenfraktionierung stattfinden kann und andererseits an der Injektionseinheit eine Temperatur von ca. 150°C erreicht wird.

5. Reduktionsofen nach einem der Ansprüche 1 bis 4,
   dadurch gekennzeichnet,
   daß die Kapillare (3) einen Innendurchmesser zwischen 0,6 - 1 mm, vorzugsweise 0,8 mm, aufweist.

6. Reduktionsofen nach einem der Ansprüche 1 bis 5,
   dadurch gekennzeichnet,
   daß der Reaktionsraum (4) in der Größe so gestaltet ist, daß mindestens 100 Wasserproben á 1 µl oder soviel andere wasserstoffhaltige Proben, die 100 Wasserproben in ihrem Wasserstoffgehalt entsprechen, mit einer Reduktionsmittelfüllung durchsetzbar sind.

7. Reduktionsofen nach einem der Ansprüche 1 bis 6,

EP 0 784 789 B1

dadurch gekennzeichnet,
daß die Länge der Kapillare (3) zwischen 50 - 100 mm beträgt.

8. Reduktionsofen nach einem der Ansprüche 1 bis 7,
dadurch gekennzeichnet,
daß die Länge des Reaktionsraumes zwischen 50 - 60 mm liegt und der Innendurchmesser des Reaktionsraumes zwischen 15 - 20 mm beträgt.

9. Reduktionsofen nach einem der Ansprüche 1 bis 8,
dadurch gekennzeichnet,
daß die Länge des Anschlußrohres (5) zwischen 60 - 100 mm, vorzugsweise 90 mm, beträgt.

10. Reduktionsofen nach einem der Ansprüche 1 bis 9,
dadurch gekennzeichnet,
daß das Reduktionsmittel im Reaktionsraum (4) Chrom ist, dem gegebenenfalls ein Katalysator zugesetzt ist, und das den Reaktionsraum (4) abschließende Material (6) Quarzwolle darstellt.

11. Verfahren zur quantitativen Deuteriumbestimmung in wasserstoffhaltigen Proben durch direkte Kopplung eines Reduktionsofens, in dem durch Reduktion aus der wasserstoffhaltigen Probe Wasserstoffgas freigesetzt wird, an ein Isotopenverhältnismassenspektrometer (IRMS),
dadurch gekennzeichnet,
daß ein Reduktionsofen gemäß einem der Ansprüche 1 bis 10, der im Reaktionsraum Chrom als Reduktionsmittel enthält, evakuiert und mittels einer äußeren Heizvorrichtung auf eine Temperatur erhitzt wird, die mindestens 700°C im Reaktionsraum und ca. 150°C an der Injektionsstelle betragen muß, dann die wasserstoffhaltige Probe in den Ofen injiziert wird, diese augenblicklich verdampft und das durch die Reduktion der Probe am Chrom entstandene Wasserstoffgas aufgrund des Druckunterschiedes zwischen dem Reduktionsofen und dem ein variables Volumen darstellenden Faltenbalg des Einlaßteils des Massenspektrometers in das IRMS strömt, nach dem Druckausgleich das Einlaßventil zum IRMS geschlossen und in üblicher Art und Weise das Isotopenverhältnis D/H der Probe gemessen wird.

12. Verfahren nach Anspruch 11,
dadurch gekennzeichnet,
daß Chrom als Chrompulver mit einer Korngröße von 0,16 -0,3 mm eingesetzt wird.

13. Verfahren nach einem der Ansprüche 11 oder 12,
dadurch gekennzeichnet,
daß dem Chrom ein Katalysator, ausgewählt aus Nickel, Platin, Kobalt, Wolfram und Molybdän oder einem Gemisch davon, zugesetzt wird.

14. Verfahren nach Anspruch 13,
dadurch gekennzeichnet,
daß das Verhältnis von Chrom zum Katalysator zwischen 100 : 1 und 20 : 1 liegt.

15. Verfahren nach einem der Ansprüche 1 bis 14
dadurch gekennzeichnet,
daß zur Injektion der Proben ein an sich bekannter Autosampler verwendet wird.

## Claims

1. A reduction oven for reducing hydrogen-containing samples and for direct coupling to a mass spectrometer, consisting of a high temperature-resistant hydrogen-impermeable material and comprising a usual injection unit (1) having a septum (2) for introducing the sample, a capillary (3) directly connecting the injection unit with the reaction chamber (4) containing the reducing agent, with no expansion vessels being connected in between, and a joint pipe (5) to the mass spectrometer, the reaction chamber (4) being confined by a temperature-resistant material (6) permeable for the hydrogen gas.

2. The reduction oven of claim of 1, characterized in that it consists of quartz glass.

7

3. The reduction oven of claim 1 or 2, characterized in that it has a usual injection unit for injecting 1 $\mu$l of water or another hydrogen-containing sample corresponding in its hydrogen content to an amount of 1 $\mu$l of water.

4. The reduction oven according to one of claims 1 through 3, characterized in that the capillary (3) is designed to have a length that on the one hand, isotope fractionating during sample evaporation, which would distort the measurement result, cannot take place, and a temperature of about 150°C is achieved at the injection unit, on the other hand.

5. The reduction oven according to one of claims 1 through 4, characterized in that the capillary (3) has an internal diameter of between 0,6-1 mm, preferably 0.8 mm.

6. The reduction oven according to one of claims 1 through 5, characterized in that the reaction chamber (4) is designed to have a size that at least 100 water samples of 1 $\mu$l each or an amount of other hydrogen-containing samples corresponding in their hydrogen content to 100 water samples can be passed using a single charge of reducing agent.

7. The reduction oven according to one of claims 1 through 6, characterized in that the length of the capillary (3) is between 50-100 mm.

8. The reduction oven according to one of claims 1 through 7, characterized in that the length of the reaction chamber ranges between 50-60 mm and the internal diameter of the reaction chamber is between 15-20 mm.

9. The reduction oven according to one of claims 1 through 8, characterized in that the length of the joint pipe (5) is between 60-100 mm, preferably 90 mm.

10. The reduction oven according to one of claims 1 through 9, characterized in that the reducing agent in the reaction chamber (4) is chromium, with a catalyst optionally being added thereto, and the material (6) confining the reaction chamber (4) is quartz wool.

11. A method for the quantitative deuterium determination in hydrogen-containing samples by direct coupling of a reduction oven, wherein hydrogen gas is liberated from the hydrogen-containing sample by reduction, to an isotope ratio mass spectrometer (IRMS), characterized in that a reduction oven according to one of claims 1 through 10, which contains chromium as reducing agent in its reaction chamber, is evacuated and heated by means of an external heating device to a temperature which must be at least 700°C in the reaction chamber and about 150°C at the injection site, the hydrogen-containing sample then is injected into the oven, evaporating instantaneously, and the hydrogen gas formed by reduction of the sample on the chromium flows into the IRMS because of the pressure difference between the reduction oven and the bellow which represents a variable volume of the inlet element of the mass spectrometer, the inlet valve to the IRMS is closed subsequent to pressure balancing, and the isotope ratio D/H of the sample is measured in the usual way.

12. The process according to claim 11, characterized in that the chromium is employed as chromium powder having a grain size of from 0.16-0.3 mm.

13. The process according to one of claims 11 or 12, characterized in that a catalyst selected from nickel, platinum, cobalt, tungsten and molybdenum or a mixture thereof is added to the chromium.

14. The process according to claim 13, characterized in that the ratio of chromium and catalyst is between 100:1 and 20:1.

15. The process according to one of claims 1 through 14, characterized in that a _per se_ known autosampler is used to inject the samples.

**Revendications**

1. Four à réduction pour réduire des échantillons hydrogénés et pour effectuer un accouplement direct à un spectromètre de masse, ledit four consistant en un matériel à haute résistance thermique et imperméable à l'hydrogène ainsi que comprenant une usuelle unité (1) d'injection ayant un septum (2) pour introduire l'échantillon; un tube (3) capillaire qui relie directement l'unité d'injection avec l'espace (4) de réaction, contenant l'agent de réduction, sans l'intercalage des vases d'expansion, et un tuyau (5) de raccordement menant au spectromètre de masse, l'espace (4) de réaction étant bouché par un matériel (6) à résistance thermique et perméable au gaz hydrogène.

2. Four à réduction selon Revendication 1,
   caractérisé en ce qu'il consiste en verre quartzeux.

3. Four à réduction selon Revendication 1 ou 2,
   caractérisé en ce qu'il présente une usuelle unité d'injection pour injecter 1 µl, d'eau ou un autre échantillon hydrogéné qui, par rapport à sa teneur en hydrogène, est conforme à la quantité d'1 µl. d'eau.

4. Four a réduction selon une des Revendications 1 à 3,
   caractérisé en ce que le tube (3) capillaire, quant à sa longueur, est façonné de telle manière que, d'une part, aucun fractionnement d'isotopes falsifiant le résultat d'une mesure n'aura lieu pendant l'évaporation d'échantillon et que, d'autre part, une température d'environ 150°C sera atteinte sur l'unité d'injection.

5. Four à réduction selon une des Revendications 1 à 4,
   caractérisé en ce que le tube (3) capillaire présente un diamètre intérieur d'entre 0.6 et 1 mm, de préférence de 0.8 mm.

6. Four à réduction selon une des Revendications 1 à 5,
   caractérisé en ce que l'espace (4) de réaction, par rapport à sa largeur, est façonné de telle manière qu'au moins 100 échantillons d'eau à 1 µl. ou autant d'autres échantillons hydrogénés qui, quant à leur teneur en hydrogène, répondent à 100 échantillons d'eau peuvent être entremêlés avec une charge d'agent de réduction.

7. Four à réduction selon une des Revendications 1 à 6,
   caractérisé en ce que la longueur du tube (3) capillaire fait entre 50 et 100 mm.

8. Four à réduction selon une des Revendications 1 à 7,
   caractérisé en ce que la longueur d'espace de réaction est entre 50 et 60 mm et que le diamètre intérieur d'espace de réaction fait entre 15 et 20 mm.

9. Four à réduction selon une des Revendications 1 à 8,
   caractérisé en ce que la longueur du tuyau (5) de raccordement fait entre 60 et 100 mm, de préférence 90 mm.

10. Four à réduction selon une des Revendications 1 à 9,
    caractérisé en ce que l'agent de réduction, dans l'espace (4) de réaction, est du chrome auquel, le cas échéant, un catalyseur est ajouté et que le matériel (6) bouchant l'espace (4) de réaction est de la laine (6) quartzeuse.

11. Procédé pour déterminer quantitativement le deutérium dans des échantillons hydrogénés par accouplement direct d'un four à réduction, dans lequel du gaz hydrogène est dégagé d'échantillon hydrogéné par réduction, à un spectromètre (IRMS) de masse de proportion d'isotopes,
    caractérisé en ce qu'un four à réduction selon une des Revendications 1 à 10, ledit four, dans l'espace de réaction, contenant du chrome comme agent de réduction, est évacué et, par l'intermédiaire d'un dispositif de chauffage extérieur, échauffé à une température qui, dans l'espace de réaction, doit faire au moins 700°C et, à l'endroit d'injection, environ 150°C; que, puis, l'échantillon hydrogéné est injecté dans le four, ledit échantillon évaporant momentanément et le gaz hydrogène émané, par la réduction d'échantillon, sur le chrome passe, à cause de la différence de pression entre le four à réduction et le soufflet d'intercirculation, ledit soufflet représentant un volume variable, de la partie d'admission du spectromètre de masse, dans le spectromètre de masse de proportion d'isotopes; qu'après la compensation de pression, la soupape d'admission menant dans le spectromètre de masse de proportion d'isotopes est fermée et que la proportion d'isotopes D/H d'échantillon est mesurée de manière usuelle.

12. Procédé selon Revendication 11,
    caractérisé en ce que du chrome d'une grosseur de grain de 0.16 à 0.3 mm est utilisé comme poudre de chrome.

13. Procédé selon Revendication 11 ou 12,
    caractérisé en ce qu'un catalyseur sélectionné parmi le nickel, le platine, le cobalt, le tungstène et le molybdène ou un mélange de tous ceux est ajouté au chrome.

**14.** Procédé selon Revendication 13,
caractérisé en ce que le rapport chrome/catalyseur est entre 100 : 1 et 20 : 1.

**15.** Procédé selon une des Revendications 1 à 14,
caractérisé en ce qu'un échantillonneur-auto connu en soi est utilisé pour l'injection des échantillons.

EP 0 784 789 B1

**Figur 1**

11

## Figur 2

Injektion

IRMS

Kapillare

Reduktionsofen

Faltenbalg
(variables Volumen)

Pumpen

## Figur 3

Septum

0,8

7

100

18

Reduktionsmittel

50

Heizofen

Quarzwolle

90

$\frac{1''}{4}$